# EUROPEAN PATENT SPECIFICATION

(11) **EP 2 094 432 B1**
(45) Date of publication and mention of the grant of the patent: **13.04.2011**
(21) Application number: 07865734.3
(22) Date of filing: 17.12.2007
(51) Int. Cl.: B23K 35/40, B23K 35/02, B21C 37/04, C23C 4/12, B23K 35/30, B23K 35/28

(54) **WIRE FEEDSTOCK AND PROCESS FOR PRODUCING THE SAME**
DRAHTROHMATERIAL UND HERSTELLUNGSVERFAHREN DAFÜR
CHARGE D'ALIMENTATION DE FIL ET PROCESSUS DE PRODUCTION ASSOCIÉ

(30) Priority: 18.12.2006 US 870437 P
(43) Date of publication of application: 02.09.2009
(73) Proprietor: Arcmelt Company, Lc., Bridgeton MO 63044 (US)
(72) Inventor: UREVICH, David J., Wentzville, MO 63385 (US)
(74) Representative: Marles, Alan David
(86) International application number: PCT/US2007/087752
(87) International publication number: WO 2008/076967

(56) References cited:
- WO-A-91/00373
- GB-A- 694 934
- JP-A- 63 063 599
- US-A- 3 940 964

## Description

### TECHNICAL FIELD

This invention relates in general to wire feedstock for thermal spraying, welding and the like, and more particularly to wire feedstock having precisely controlled constituents and a process for manufacturing the same.

### BACKGROUND ART

Deposited aluminides, which are intermetallic alloys of aluminum and other metals, can withstand high temperatures in corrosive environments, and as a consequence they find use as overlays and protective coatings on other metals, such as steel, that are readily attacked in such corrosive environments. Most often they are applied to a steel substrate by thermal spraying, particularly spraying in which the heat source is an arc struck between two electrodes. Indeed, the feedstock, which takes the form of two wires, can form the electrodes. Because both wires are consumed to provide the metal that is sprayed onto the substrate, the wires are small in cross section, often having a diameter on the order of 2,38 mm or 3,18 mm (3/32 or 1/8 inch).

Nickel aluminides and to a lesser measure, iron aluminides, find widespread use in weld overlays and coatings. The typical wire for the wire electrodes that produce aluminides for weld overlays and coatings has a nickel or iron case and a core composed of aluminum powder. The arc melts both and they unite in an exothermic reaction. The exothermic reaction elevates the temperature of the metals and contributes to the melting of them. Rapid solidification of the metal on the steel substrate forms the aluminide, and this assures a better bond with the substrate.

But the nickel or iron of the case does not mix well with the aluminum of the core. As a consequence, the coating contains excessive free nickel or iron and excessive free aluminum and not enough aluminide. In short, the aluminide phase of the coating is deficient.

Apart from that, aluminum powder has an enormous surface area along which oxygen reacts with the aluminum to form aluminum oxide, and aluminum oxide detracts from the uniformity and integrity of the coating by imparting aluminum oxide inclusions to the coating. Indeed, it contributes to a diminished production of aluminide.

Other types of feedstock wire are equally deficient. For example, a solid wire alloy of nickel and aluminum when fed into an arc or other heat source to produce a thermal spray, results in no exothermic reaction and no aluminide is deposited on the substrate. Some nickel-aluminum wires have an aluminum wire core with a nickel case around it (see e.g. WO91/00373, which is considered to represent the closest state of the art). From a practical standpoint, this wire cannot be produced in diameters less than about 3,18 mm (1/8 inch), and thus it is not suitable for twin arc spraying, which requires diameters at least that small for the two wires. Moreover, the arc tends to attach to the more conductive aluminum, and this detracts from the production of aluminide. Some wires are tubular, but these wires contain oxygen, which detracts from the uniformity and quality of the aluminide coating.

Alloys have other deficiencies that sometimes render them unsuitable for wire feedstock, whether the feedstock be for spraying or welding or for some other procedure. The alloy of nickel and aluminum serves as an example. This alloy can contain no more than about 10% aluminum by volume, since that is as much as the nickel will accept. But some procedures, such as the deposit of aluminides by thermal spraying, demand feedstock containing a greater amount of aluminum. The same holds true for wire feedstock containing alloys other metals such as nickel and copper, known as Monel metal, which can contain no more than about 35% copper, but more copper may be desirable for some procedures.

### BRIEF DESCRIPTION OF THE DRAWINGS

Figure 1 is a cross-sectional view of a wire produced in accordance with the present invention for use as a feedstock in thermal spraying that provides an aluminide coating, there being a grid superimposed on the cross section to show the distribution of nickel and aluminum in the wire;
Figure 2 is a perspective view of two strips of metal used to form the wire;
Figures 3 - 5 are cross-sectional views of the strips during successive deformations of them to prepare them for a final reduction in size; and
Figure 6 is a perspective view of an aluminum-clad nickel strip that may also be used to form the wire.

Corresponding reference numerals indicate corresponding parts throughout the several figures of the drawings.

### BEST MODES FOR CARRYING OUT THE INVENTION

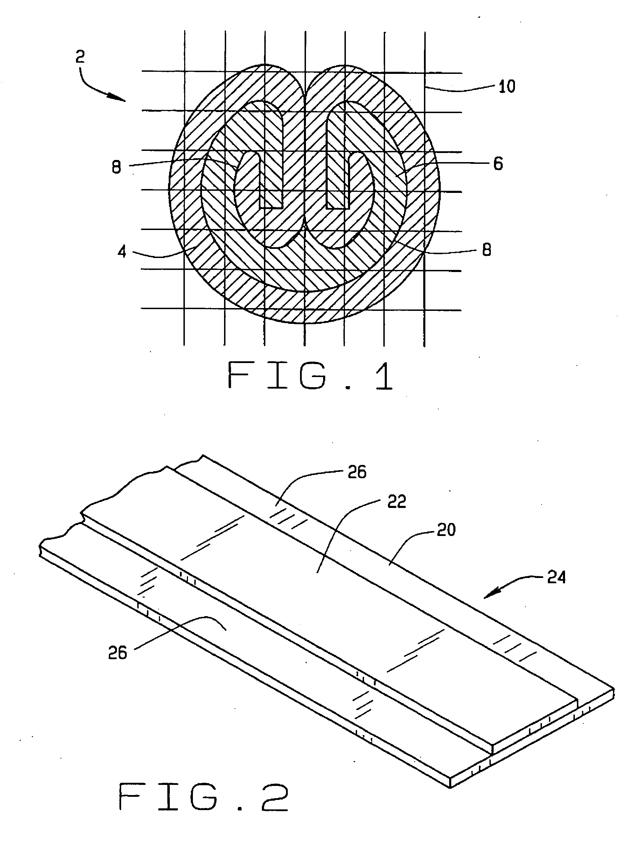

A wire 2 (Fig. 1) for use as a consumable electrode in a thermal spraying apparatus or for use as simply a feedstock for an arc, combustion or plasma spraying or welding apparatus, includes a nickel component 4 and an aluminum component 6, with the components 4 and 6 being in face-to-face contact throughout the cross-section of the wire 2. The nickel component 4 forms the exterior of the wire 2 and exceeds the aluminum component, both in weight and surface area. Within the wire 2 the two components 4 and 6 are in face-to-face contact along convoluted interfaces 8 that are spaced somewhat uniformly across the wire 2, typically without any bonding along the interfaces 8. When a grid 10 having squares approximately the size of the combined thickness of the nickel component 4 and the aluminum component 6 at any interface 8 is superimposed on a cross section of the wire 2, each square of the grid 10 will possess nickel and aluminum in somewhat the same volumetric proportions. The nickel component 4 may be an alloy of nickel and likewise the aluminum component 6 may be an alloy of aluminum.

To produce the wire 2, a flat strip 20 of nickel and a flat strip 22 of aluminum, both of equal length, are brought together face-to-face to provide a laminate 24 (Fig. 2). Typically, the aluminum strip 22 will carry an aluminum oxide coating on all of its surfaces owing to the propensity of aluminum to unite with oxygen in the presence of air. That coating prevents the development of a diffusion bond between the two strips 20 and 22. Both strips 20 and 22 should be quite ductile and hence malleable. The width of the nickel strip 20 exceeds the width of the aluminum strip 22, which is centered over the nickel strip 20, leaving two side segments 26 of the nickel strip 20 projecting beyond the side edges of the aluminum strip 22. Even so, the volumetric proportions of nickel and aluminum are the same as that desired for the wire 2.

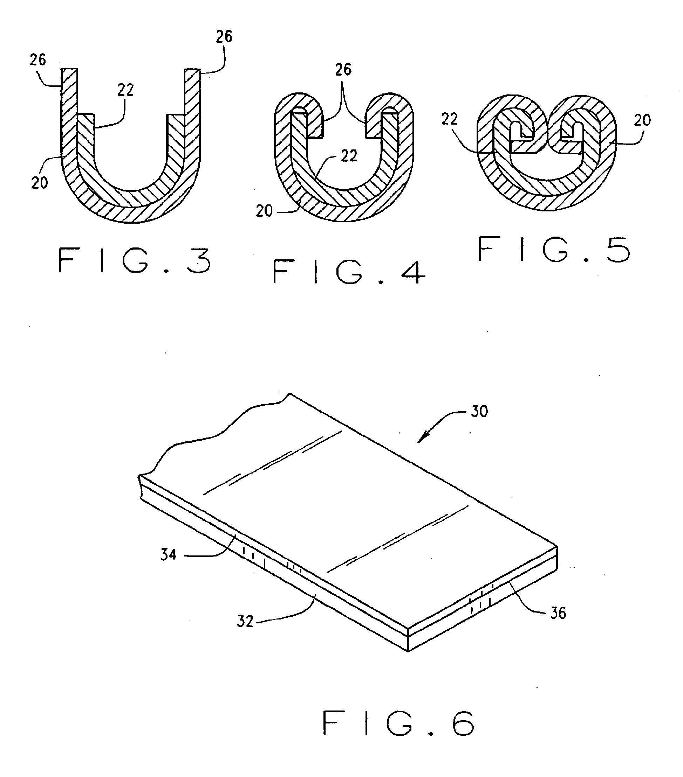

Thereupon, the strips 20 and 22 are rolled into a U-shaped configuration with the narrower aluminum strip 22 being on the inside (Fig. 3). The side segments 26 of the nickel strip 20 continue to project beyond the edges of the aluminum strip 22, but face each other and are generally parallel. Next the side segments 26 are rolled over the edges of the aluminum strip 22 to capture the aluminum strips 22 in the nickel strip 20. The roll forming continues and brings the side segments 26 of the nickel strip 20 against the inside face of the U-shaped aluminum strip 22 (Fig. 4). This locks the two strips 20 and 22 together and produces several convolutions at the interfaces between the strips 20 and 22.

At this juncture, each of the strips 20 and 22 still possess a U-shaped configuration, inasmuch as the free ends of the unbonded laminate 24 are separated. The laminate 24 at its free ends is then rolled or otherwise deformed inwardly so that the end edges on the side segments 26 for the nickel strip 20 come against the inside faces of the U-shaped aluminum strip 22 (Fig. 5). The deformation also turns the aluminum strip 22 over onto itself for a short distance along the free ends of the U-shaped strip 22, that is at the former side edges of the aluminum strip 22. The joined together strips 20 and 22, at this juncture, in cross section possess an enclosed configuration, somewhat cylindrical, on the order of 6,35 mm to 7,62 mm (0.25 to 0.30 inches) thick.

Finally, the joined together strips 20 and 22 are drawn through a die or rolled to a lesser diameter - typically 2,38 mm to 3,18 mm (3/32 to 1/8 inch). This consolidates the strips 20 and 22 even further and indeed causes the aluminum from the aluminum strip 22 to flow and fill voids that may otherwise exist in the wire 2 (Fig. 1) that is produced. Thus, the wire 2 has a dense cross-section composed of a nickel component 4 and an aluminum component 6 in face-to-face contact together along a convoluted interface 8 of substantial surface area. The convoluted interface 8 lies not only along the inside surfaces of that portion of the nickel component 4 that forms the exterior of the wire 2, but also throughout the interior of the wire 2. This produces a generally uniform distribution of nickel and aluminum throughout the wire 2 in desired proportions. In other words, the wire 2 has its nickel component 4 and its aluminum component 6 in generally equal ratios throughout the cross-section as reflected in the grid 10 that is superimposed on the wire 2. Moreover, the consolidation in the final draw or roll eliminates any air gaps that previously existed in the cross-section.

As a consequence of the generally uniform distribution, the nickel and aluminum mix well in the heat source into which the wire 2 is fed, and this fosters an exothermic reaction. When the heat source is an arc, that arc attaches generally uniformly across the cross-section, heating the nickel component 4 equally as well as the more conductive aluminum component 6. The coating deposited on a substrate to which the molten constituents are directed contains more nickel aluminide and less free nickel and less free aluminum. Moreover, the surface area of the aluminum component 6, which equals the surface area of the aluminum strip 12 from which the component 6 derives, is considerably less than the surface area of an equivalent amount of aluminum powder. Hence, less aluminum oxide is present to detract from the exothermic reaction and the subsequent quality of the coating.

The aluminum oxide on the aluminum strip 22 produces some aluminum oxide inclusions in the deposited aluminide coating. Usually, these inclusions can be tolerated. Where they cannot, the aluminum strip 22 may be cleaned to remove aluminum oxide from it, and then the procedure for converting the laminate 24 into the wire 2 may be completed in an oxygen free atmosphere, such as an inert gas atmosphere.

An iron strip may be substituted for the nickel strip 20 to produce a wire 2 for depositing iron-aluminide. Also, a titanium strip may be substituted for the nickel strip 20 to produce a wire 2 for depositing titanium-aluminide. Other combinations of metals are possible as well, and they need not be formulated for the production of aluminide coatings. Indeed, some may be formulated for depositing other coatings or for other procedures such as arc welding. Such combinations include nickel and titanium, a nickel-chromium alloy and titanium, a nickel-chromium alloy and aluminum, and nickel and copper, to name a few. Irrespective of the combination of metals, they need not be confined to proportions represented by the limits of alloying such metals. For example, an alloy of nickel and aluminum may have no more than about 10% aluminum by volume. But the nickel-aluminum wire 2 may contain a much higher percentage of aluminum. Where oxide inclusions adversely affect welds, the strips 20 and 22 used in the laminate 24 should be free of oxide coatings.

A bonded laminate 30 (Fig. 6) may be substituted for the unbonded laminate 24. It is derived from a sheet of aluminum-clad nickel having nickel lamina 32 and an aluminum lamina 34, with the two laminae 32 and 34 being diffusion bonded together along an interface 36. The volumetric proportions of the laminae 32 and 34 in the laminate 30 correspond respectively to those desired for the nickel component 4 and the aluminum component 6 in the wire 2. Indeed, the laminate 30 is rolled and drawn into the wire 2 using essentially the same process for converting the unbonded laminate 24 into the wire 2. However, the aluminum lamina 34 being bonded firmly to the nickel lamina 32 need not be initially captured in the nickel lamina 32 by rolling the ends of the nickel lamina 32 over the ends of the aluminum lamina 34. Indeed, the aluminum lamina 34, being as wide as the nickel lamina 32, leaves no side edges 26 on the nickel lamina 32 to roll over into the aluminum lamina 32.

The wire 2 with its convoluted interface 8 may be formed in other cross-sectional configurations, such as elliptical and rectangular, including square.

## Claims

1. A wire (2) for use as a feedstock in thermal spraying and welding, said wire comprising:
a first metal strip (4) and a second metal strip (6) in face-to-face contact along a convoluted interface that extends throughout the interior of the wire (2).

2. A wire according to claim 1 wherein the first metal strip (4) forms the exterior surface of the wire (2).

3. A wire according to claim 2 wherein the first metal strip (4,26) is greater in cross-sectional area than the second metal strip.

4. A wire according to claim 2 wherein the second metal strip (6) is primarily aluminium and/or the first metal strip (4) is made primarily from one of a group of metals comprising nickel and iron.

5. A wire according to claim 1 wherein the first metal strip (4) and the second metal strip (6) are distributed in generally uniform proportions throughout the cross-section of the wire (2).

6. A wire according to claim 1 wherein the first metal strip (4,32) and the second metal strip (6,34) are along some of the interface diffusion bonded together.

7. A wire according to claim 1 that is free of internal voids.

8. A wire according to claim 1 wherein the volume of metal in the second initial strip exceeds the volume of that metal that may be alloyed with the metal of the first metal strip.

9. A process for producing a wire (2) for use as a feedstock in thermal spraying and welding, said process comprising:
providing first (4,26) and second (6,22) metal strips that are in face-to-face contact;
deforming the face-to-face strips into a U-shared configuration with the second strip (6,22) located inside the first strip (4,26);
further deforming the strips so that the free ends of the U-shaped configuration turn inwardly toward each other and the strips are together along a convoluted interface; and
thereafter reducing the cross-sectional size of the strips.

10. A process according to claim 11 wherein the first strip (4,26) wider than the second strip (6,22) and wherein the strips are brought together with wide segments of the first strip projecting beyond the side edges of the second strip.

11. The process according to claim 9 wherein the second strip (6,22) is primarily aluminium and/or the first strip (4,26) is made primarily from one of a group of metals comprising nickel and iron.

12. The process according to claim 11 wherein the strips are initially separate.

13. The process according to claim 11 wherein the strips (4,32 ; 6,34) are initially diffusion bonded (36) together.

14. The process according to claim 11 wherein the final deforming of the strips is achieved by drawing the already deformed strips through a die.

15. The process according to claim 14 wherein the initial deforming of the strips is achieved by roll forming.

## Patentansprüche

1. Draht (2) zur Verwendung als Aufgabematerial beim thermischen Spritzen und Schweißen, wobei der Draht umfasst: einen ersten Metallstreifen (4) und einen zweiten Metallstreifen (6), die sich in einem Flächenkontakt entlang einer verschachtelten Berührungsfläche befinden, die sich durch das Innere des Drahts (2) erstreckt.

2. Draht nach Anspruch 1, wobei der erste Metallstreifen (4) die Außenfläche des Drahts (2) bildet.

3. Draht nach Anspruch 2, wobei der erste Metallstreifen (4, 26) eine größere Querschnittsfläche aufweist als der zweite Metallstreifen.

4. Draht nach Anspruch 2, wobei der zweite Metallstreifen (6) hauptsächlich aus Aluminium und/oder der erste Metallstreifen (4) hauptsächlich aus einem Element der Nickel und Eisen umfassenden Gruppe besteht.

5. Draht nach Anspruch 1, wobei der erste Metallstreifen (4) und der zweite Metallstreifen (6) in im Wesentlichen gleichen Proportionen über den Querschnitt des Drahts (2) verteilt sind.

6. Draht nach Anspruch 1, wobei der erste Metallstreifen (4, 32) und der zweite Metallstreifen (6, 34) entlang eines Teils der Berührungsfläche durch Diffusion miteinander verbunden sind.

7. Draht nach Anspruch 1 der frei von inneren Hohlräumen ist.

8. Draht nach Anspruch 1, wobei das Volumen des Metalls in dem zweiten Ausgangsstreifen das Volumen desjenigen Metalls übertrifft, das mit dem Metall des ersten Metallstreifens legiert werden kann.

9. Verfahren zur Herstellung eines Drahts (2) zur Verwendung als Aufgabematerial beim thermischen Spritzen und Schweißen, wobei das Verfahren folgende Schritte umfasst: Bereitstellen von ersten (4, 26) und zweiten (6, 22) Metallstreifen, die sich in einem Flächenkontakt miteinander befinden; Verformung der sich in Flächenkontakt befindenden Streifen in eine U-Form, wobei der zweite Streifen (6, 22) innerhalb des ersten Streifens (4, 26) angeordnet ist; weiteres Verformen der Streifen bis die freien Enden der U-Form nach Innen zueinander hin gewandt sind und die Streifen entlang einer verschachtelten Berührungsfläche aneinanderliegen; und nachfolgend Reduzierung der Querschnittsgröße der Streifen.

10. Verfahren nach Anspruch 9, wobei der erste Streifen (4, 26) breiter als der zweite Streifen (6, 22) ist, und wobei die Streifen so zusammengebracht werden, dass breite Segmente des ersten Streifens über die Seitenkanten des zweiten Streifens hinausragen.

11. Verfahren nach Anspruch 9, wobei der zweite Metallstreifen (6, 22) hauptsächlich aus Aluminium und/oder der erste Metallstreifen (4, 26) hauptsächlich aus einem Element der Nickel und Eisen umfassenden Gruppe besteht.

12. Verfahren nach Anspruch 9, wobei die Streifen zunächst voneinander getrennt sind.

13. Verfahren nach Anspruch 9, wobei die Streifen (4, 32; 6, 34) anfänglich miteinander diffusionsverbunden (36) sind.

14. Verfahren nach Anspruch 9, wobei die Endverformung der Streifen durch Ziehen der bereits verformten Streifen durch eine Düse erfolgt.

15. Verfahren nach Anspruch 14, wobei das anfängliche Verformen der Streifen durch Wälzumformen erfolgt.

## Revendications

1. Fil (2) à utiliser comme charge d'alimentation en pulvérisation thermique et soudage, ledit fil comprenant :
une première bande métallique (4) et une deuxième bande métallique (4) en contact en face à face le long d'une interface alvéolée qui s'étend tout au long de l'intérieur du fil.

2. Fil selon la revendication 1 dans lequel la première bande métallique (4) forme la surface extérieure du fil (2).

3. Fil selon la revendication 2 dans lequel la première bande métallique (4, 26) a une section transversale plus importante que celle de la deuxième bande métallique.

4. Fil selon la revendication 2 dans lequel la deuxième bande métallique (6) est principalement en aluminium et/ou la première bande métallique (4) est fabriquée principalement à partir de l'un d'un groupe de métaux comprenant du nickel et du fer.

5. Fil selon la revendication 1 dans lequel la première bande métallique (4) et la deuxième bande métallique (6) sont distribuées en proportions globalement uniformes tout au long de la section du fil (2).

6. Fil selon la revendication 1 dans lequel la première bande métallique (4, 32) et la deuxième bande métallique (6, 34) sont liées entre elles par diffusion le long d'une partie de l'interface interface.

7. Fil selon la revendication 1 qui est dépourvu de vides internes.

8. Fil selon la revendication 1 dans lequel le volume de métal dans la deuxième bande initiale dépasse le volume de ce métal qui peut être allié avec le métal de la première bande métallique.

9. Processus destiné à fabriquer un fil (2) à utiliser comme charge d'alimentation en pulvérisation thermique et soudage, ledit processus comprenant le fait de :
prévoir des première (4, 26) et deuxième (6, 22) bandes métalliques en contact en face à face ;
déformer les bandes en face à face selon une configuration en forme de U avec la deuxième bande (6, 22) située à l'intérieur de la première bande (4, 26) ;
déformer davantage les bandes de manière à ce que les extrémités libres de la configuration en forme de U tournent intérieurement les unes vers les autres et les bandes soient ensemble le long d'une interface alvéolée ; et
réduire par la suite la taille transversale des bandes.

10. Processus selon la revendication 9 dans lequel la première bande (4, 26) est plus large que la deuxième bande (6, 22), et dans lequel les bandes sont réunies entre elles des segments larges de la première bande se projetant au-delà des extrémités latérales de la deuxième bande.

11. Processus selon la revendication 9 dans lequel la deuxième bande (6, 22) est principalement en aluminium et/ ou la première bande (4, 26) est principalement réalisée à partir de l'un d'un groupe de métaux comprenant du nickel et du fer.

12. Processus selon la revendication 9 dans lequel les bandes sont initialement séparées.

13. Processus selon la revendication 9 dans lequel les bandes (4, 32 ; 6, 34) sont initialement liées (36) entre elles par diffusion.

14. Processus selon la revendication 9 dans lequel la déformation finale des bandes est réalisée en étirant les bandes déjà déformées à travers une matrice.

15. Processus selon la revendication 14 dans lequel la déformation initiale des bandes est réalisée par profilage.
